# EUROPEAN PATENT APPLICATION

(11) **EP 4 462 456 A1**
(43) Date of publication of application: **13.11.2024**
(21) Application number: 24167066.0
(22) Date of filing: 27.03.2024
(51) Int. Cl.: H01F 27/28, H01F 27/36

(54) **SYSTEMS AND METHODS FOR MULTIPLE-OUTPUT ISOLATED POWER SUPPLY FOR GATE-DRIVER CIRCUIT**

(30) Priority: 08.05.2023 US 202318313714
(71) Applicant: Delphi Technologies IP Limited, St Michael BB 11113 (BB)
(72) Inventor: NGUYEN, Van Thuan, Kokomo, IN (US); LOSADA, Helena Cristobal, Carmel, IN (US)
(74) Representative: Office Freylinger

(57) **Abstract**

A planar transformer includes: a first primary coil in a first layer of a printed circuit board (PCB); a first secondary coil in one or more second layers in the PCB; and a second secondary coil in the one or more second layers.

## Description

### TECHNICAL FIELD

Various embodiments of the present disclosure relate generally to systems and methods for multiple-output isolated power supplies for gate-driver circuits and, more particularly, to systems and methods for multiple-output isolated power supplies using planar transformers including one or more primary coils and two or more secondary coils.

### BACKGROUND

On-board chargers, inverters, or DC-DC converters may include many semiconductor switches. Each semiconductor switch may require an isolated power supply to drive an associated gate driver circuit. Power conversion for the isolated power supplies may occur through use of transformers to transfer power from a power source to a load. Multiple isolated power supplies of gate driver circuits may require significant space in a power architecture.

The present disclosure is directed to overcoming one or more of these above-referenced challenges.

### SUMMARY OF THE DISCLOSURE

In some aspects, the techniques described herein relate to a planar transformer, including: a first primary coil in a first layer of a printed circuit board (PCB); a first secondary coil in one or more second layers in the PCB; and a second secondary coil in the one or more second layers.

In some aspects, the techniques described herein relate to a planar transformer, further including: one or more ferrite materials, the one or more ferrite materials providing a shield for electromagnetic interference for the planar transformer.

In some aspects, the techniques described herein relate to a planar transformer, further including: an electromagnetic shielding coil in or on the first layer or in or on the one or more second layers.

In some aspects, the techniques described herein relate to a planar transformer, wherein: the electromagnetic shielding coil surrounds the first primary coil in the first layer; and an outer perimeter of the electromagnetic shielding coil is larger than an outer perimeter of the first secondary coil with an outer perimeter of the second secondary coil.

In some aspects, the techniques described herein relate to a planar transformer, wherein the first primary coil, the first secondary coil, and the second secondary coil include flat windings.

In some aspects, the techniques described herein relate to a planar transformer, wherein an outer perimeter of the first primary coil is larger than an outer perimeter of the first secondary coil and an outer perimeter of the second secondary coil.

In some aspects, the techniques described herein relate to a planar transformer, further including: a second primary coil in the first layer.

In some aspects, the techniques described herein relate to a planar transformer, wherein the first secondary coil is on a first side of the first primary coil and the second secondary coil is on a second side of the first primary coil, the second side being opposite to the first side, wherein the first primary coil, the first secondary coil, and the second secondary coil are arranged in a sandwiched coil arrangement.

In some aspects, the techniques described herein relate to a planar transformer, wherein the first secondary coil and the second secondary coil are on a same side of the first primary coil.

In some aspects, the techniques described herein relate to a planar transformer, wherein an outer perimeter of the first primary coil is equal to an outer perimeter of the first secondary coil, and the outer perimeter of the first secondary coil is equal to an outer perimeter of the second secondary coil.

In some aspects, the techniques described herein relate to a system, including: a gate driver connectable to a DC voltage source; two or more power modules; and a planar transformer, including: a first primary coil connected to the gate driver; and two or more secondary coils connected to the first primary coil and the two or more power modules.

In some aspects, the techniques described herein relate to a system, wherein the first primary coil is in a first layer of a printed circuit board (PCB), and the two or more secondary coils include: a first secondary coil in one or more second layers in the PCB; and a second secondary coil in the one or more second layers.

In some aspects, the techniques described herein relate to a system, further including: an electromagnetic shielding coil in or on the first layer, the electromagnetic shielding coil surrounding the first primary coil in the first layer, wherein an outer perimeter of the electromagnetic shielding coil is larger than an outer perimeter of the first secondary coil with an outer perimeter of the second secondary coil.

In some aspects, the techniques described herein relate to an inverter including the system.

In some aspects, the techniques described herein relate to a vehicle including the inverter.

In some aspects, the techniques described herein relate to a system, including: two or more power modules provided on a first side of a power board; a cold plate coupled to the two or more power modules; and a planar transformer provided on a second side of the power board, the second side being opposite to the first side, the planar transformer including: a first primary coil in a first layer of a printed circuit board (PCB); and two or more secondary coils in one or more second layers in the PCB.

In some aspects, the techniques described herein relate to a system, wherein the two or more secondary coils include: a first secondary coil in the one or more second layers in the PCB; and a second secondary coil in the one or more second layers, wherein the first secondary coil is on a first side of the first primary coil and the second secondary coil is on a second side of the first primary coil, the second side being opposite to the first side, and wherein the first primary coil, the first secondary coil, and the second secondary coil are arranged in a sandwiched coil arrangement.

In some aspects, the techniques described herein relate to a system, wherein the two or more secondary coils include: a first secondary coil in the one or more second layers in the PCB; and a second secondary coil in the one or more second layers, and wherein the first secondary coil and the second secondary coil are on a same side of the first primary coil.

In some aspects, the techniques described herein relate to a system, further including: a second primary coil in the first layer, wherein the two or more secondary coils include: a first secondary coil in the one or more second layers in the PCB; and a second secondary coil in the one or more second layers, wherein the first secondary coil is on one side of the first primary coil, and wherein the second secondary coil is on one side of the second primary coil.

In some aspects, the techniques described herein relate to a system, further including: an electromagnetic shielding coil in or on the first layer, the electromagnetic shielding coil surrounding the first primary coil and the second primary coil in the first layer.

Additional objects and advantages of the disclosed embodiments will be set forth in part in the description that follows, and in part will be apparent from the description, or may be learned by practice of the disclosed embodiments. The objects and advantages of the disclosed embodiments will be realized and attained by means of the elements and combinations particularly pointed out in the appended claims.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary system infrastructure for a vehicle including a combined inverter and converter, according to one or more embodiments.
FIG. 2 depicts an exemplary system infrastructure for the combined inverter and converter of FIG. 1, according to one or more embodiments.
FIG. 3 depicts an exemplary system infrastructure for the controller of FIG. 2, according to one or more embodiments.
FIG. 4 depicts an exemplary power converter system in accordance with one or more embodiments described herein.
FIG. 5 depicts an exemplary power converter system in accordance with one or more embodiments described herein.
FIG. 6 depicts an exemplary power converter system in accordance with one or more embodiments described herein.
FIG. 7 depicts an exemplary planar transformer that may be implemented in the converter system shown in FIGS. 4, 5, and 6 in accordance with one or more embodiments described herein.
FIG. 8 depicts an exemplary planar transformer that may be implemented in the converter system shown in FIGS. 4, 5, and 6 in accordance with one or more embodiments described herein.
FIG. 9 depicts an exemplary planar transformer that may be implemented in the converter system shown in FIGS. 4, 5, and 6 in accordance with various embodiments described herein.
FIG. 10 depicts an exemplary planar transformer that may be implemented in the converter system shown in FIGS. 4, 5, and 6 in accordance with one or more embodiments described herein.
FIG. 11 depicts an exemplary planar transformer that may be implemented in the converter system shown in FIGS. 4, 5, and 6 in accordance with one or more embodiments described herein.
FIG. 12 depicts an exemplary planar transformer that may be implemented in the converter system shown in FIGS. 4, 5, and 6 in accordance with one or more embodiments described herein.
FIG. 13 depicts a power converter assembly that may be implemented in the converter systems shown in FIGS. FIGS. 4, 5, and 6 in accordance with one or more embodiments described herein.
FIG. 14 depicts a power converter assembly that may be implemented in the converter systems shown in FIGS. 4, 5, and 6 in accordance with one or more embodiments described herein.

### DETAILED DESCRIPTION OF EMBODIMENTS

Both the foregoing general description and the following detailed description are exemplary and explanatory only and are not restrictive of the features, as claimed. As used herein, the terms "comprises," "comprising," "has," "having," "includes," "including," or other variations thereof, are intended to cover a non-exclusive inclusion such that a process, method, article, or apparatus that comprises a list of elements does not include only those elements, but may include other elements not expressly listed or inherent to such a process, method, article, or apparatus. In this disclosure, unless stated otherwise, relative terms, such as, for example, "about," "substantially," and "approximately" are used to indicate a possible variation of ±10% in the stated value. In this disclosure, unless stated otherwise, any numeric value may include a possible variation of ±10% in the stated value.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section. For example, in the context of the disclosure, the switching devices may be described as switches or devices, but may refer to any device for controlling the flow of power in an electrical circuit. For example, switches may be metal-oxide-semiconductor field-effect transistors (MOSFETs), bipolar junction transistors (BJTs), insulated-gate bipolar transistors (IGBTs), or relays, for example, or any combination thereof, but are not limited thereto.

Various embodiments of the present disclosure relate generally to systems and methods for multiple-output isolated power supplies for gate-driver circuits and, more particularly, to systems and methods for multiple-output isolated power supplies using planar transformers including one or more primary coils and two or more secondary coils.

The terminology used below may be interpreted in its broadest reasonable manner, even though it is being used in conjunction with a detailed description of certain specific examples of the present disclosure. Indeed, certain terms may even be emphasized below; however, any terminology intended to be interpreted in any restricted manner will be overtly and specifically defined as such in this Detailed Description section.

Some gate driver power supplies have either high cost or high profile. In on-board chargers, inverters, and DC-DC converters, for example, there may be numerous semiconductor switches, where each semiconductor switch may need an associated isolated power supply to ensure isolation between switches in high voltage applications. Some ferrite-core conventional transformers pose a challenge for automotive applications in which space is restricted, especially in height. Some ferrite-core transformers have a high profile, such as a height of approximately 20 mm, for example, which poses a challenge to deploy in automotive applications. Some integrated power supplies may have a small footprint and be low profile, but the cost may be high.

To address the challenges outlined above, including problems existing with high profile ferrite-core transformers, one or more embodiments described herein may include printed circuit board (PCB) winding coils, which are flat and thin such as less than approximately 2 mm, for example. According to one or more embodiments, one transformer driver may be used to generate multiple output voltages. According to one or more embodiments, a ferrite core may be omitted to further save material costs and assembly costs.

According to one or more embodiments, a single transformer driver may be used to generate multiple outputs, and a single primary winding may be used to transfer power to multiple secondary windings, further helping to save space on PCB boards. Depending on the coil arrangement and the coupling between them, several circuit topologies may be used for power conversion.

According to one or more embodiments, a power converter system may include a planar transformer with a ferrite core with a single resonant capacitor on the primary coil, which may include many LLC converters. According to one or more embodiments, a power converter system may include a planar transformer which may omit a ferrite core, and resonant capacitors may be needed on secondary coils. According to one or more embodiments, a power converter system may include a planar transformer that may include multiple primary coils and multiple secondary coils. According to one or more embodiments a planar transformer may include a sandwiched coil arrangement with a ferrite shielding core. According to one or more embodiments, a planar transformer may include a sandwiched coil arrangement without a ferrite shielding core. In the sandwiched coil arrangement, a primary coil may be sandwiched between two secondary coils. In the sandwiched coil arrangement with a ferrite shielding core, ferrite may be used to increase the magnetic coupling and efficiency. In the sandwiched coil arrangement without a ferrite shielding core, an electromagnetic shielding coil may be used to limit the fringing field.

According to one or more embodiments, a planar transformer may include a coil arrangement with one primary coil and two or more secondary coils with a ferrite shielding core. According to one or more embodiments, a planar transformer may include a coil arrangement with one primary coil and two or more secondary coils without a ferrite shielding core. In the arrangement with one primary coil, a single primary coil may be used to transfer power to two or more secondary coils. In the arrangement with a ferrite shielding coil, the ferrite shielding coil may be used to increase the magnetic coupling and efficiency. In the arrangement with the electromagnetic shielding coil, the electromagnetic shielding coil may be used to limit the fringing field.

According to one or more embodiments, a planar transformer may include a coil arrangement with two or more primary coils and two or more secondary coils. In this coil arrangement, a ferrite shielding core may be used to increase the magnetic coupling and efficiency. In this coil arrangement, an electromagnetic shielding coil may be used to limit the fringing field and a ferrite shielding core may be omitted.

According to one or more embodiments, an assembly may include a dual-output isolated power supply which may be provided on one side of a main power board. In this case, the number of layers on the main PCB power board may be reduced, which may reduce costs.

Using lower-cost and lower profile PCB windings instead of using higher-cost and higher profile conventional ferrite transformers may reduce cost and space of power supplies in automotive applications.

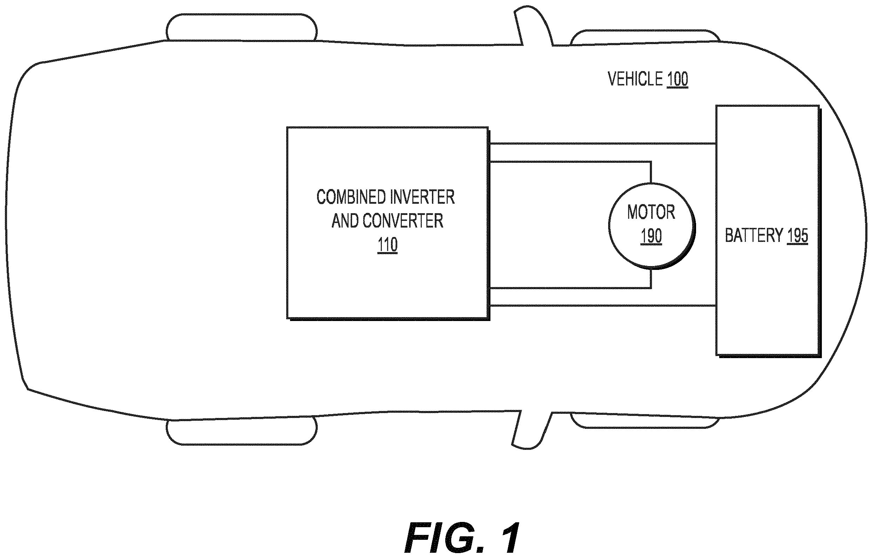

FIG. 1 depicts an exemplary system infrastructure for a vehicle including a combined inverter and converter, according to one or more embodiments. In the context of this disclosure, the combined inverter and converter may be referred to as an inverter. As shown in FIG. 1, electric vehicle 100 may include an inverter 110, a motor 190, and a battery 195. The inverter 110 may include components to receive electrical power from an external source and output electrical power to charge battery 195 of electric vehicle 100. The inverter 110 may convert DC power from battery 195 in electric vehicle 100 to AC power, to drive motor 190 of the electric vehicle 100, for example, but the embodiments are not limited thereto. The inverter 110 may be bidirectional, and may convert DC power to AC power, or convert AC power to DC power, such as during regenerative braking, for example. Inverter 110 may be a three-phase inverter, a single-phase inverter, or a multi-phase inverter.

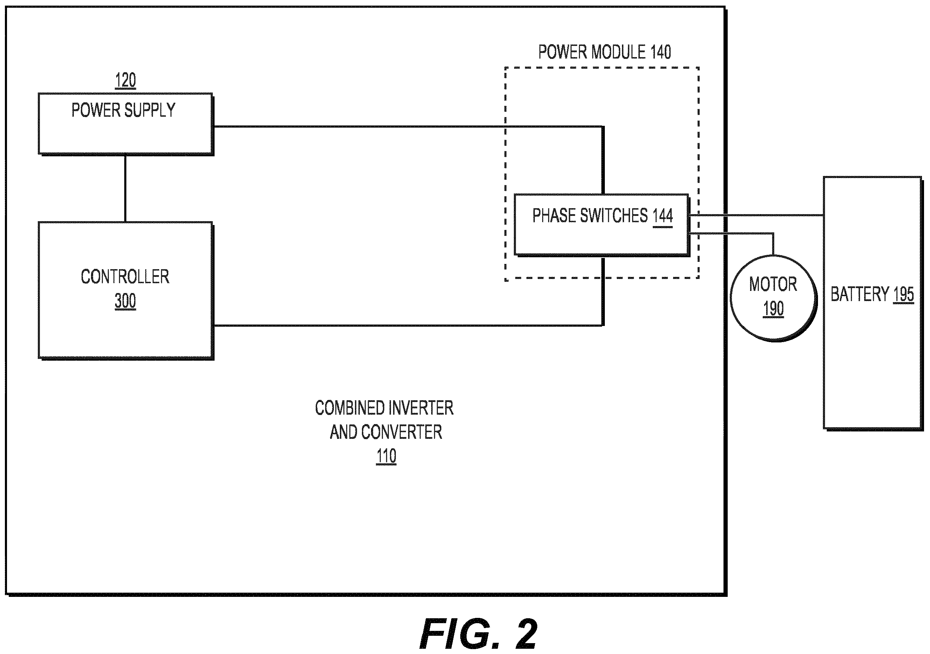

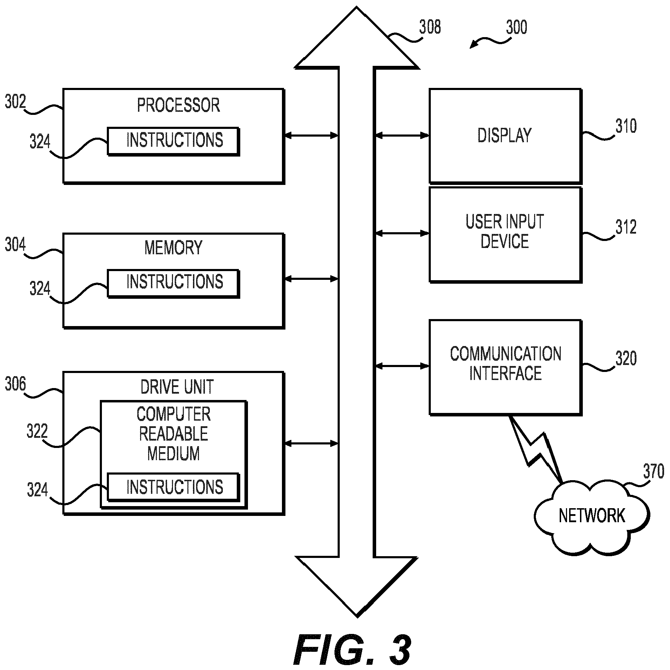

FIG. 2 depicts an exemplary system infrastructure for the inverter 110 of FIG. 1, according to one or more embodiments. Electric vehicle 100 may include inverter 110, motor 190, and battery 195. Inverter 110 may include a controller 300 (shown in FIG. 3) to control the inverter 110. Inverter 110 may include a power supply 120 and a power module 140. Power module 140 may include phase switches 144. Phase switches 144 may be connected to motor 190 and battery 195.

The controller 300 may send signals to and receive signals from power module 140 and phase switches 144. Phase switches 144 may be connected to motor 190 and battery 195. Phase switches 144 may be used to transfer energy from motor 190 to battery 195, from battery 195 to motor 190, from an external source to battery 195, or from battery 195 to an external source, for example.

FIG. 3 depicts an exemplary system infrastructure for controller 300 of FIG. 2, according to one or more embodiments. The controller 300 may include one or more controllers.

The controller 300 may include a set of instructions that can be executed to cause the controller 300 to perform any one or more of the methods or computer based functions disclosed herein. The controller 300 may operate as a standalone device or may be connected, e.g., using a network, to other computer systems or peripheral devices.

In a networked deployment, the controller 300 may operate in the capacity of a server or as a client in a server-client user network environment, or as a peer computer system in a peer-to-peer (or distributed) network environment. The controller 300 can also be implemented as or incorporated into various devices, such as a personal computer (PC), a tablet PC, a set-top box (STB), a personal digital assistant (PDA), a mobile device, a palmtop computer, a laptop computer, a desktop computer, a communications device, a wireless telephone, a land-line telephone, a control system, a camera, a scanner, a facsimile machine, a printer, a pager, a personal trusted device, a web appliance, a network router, switch or bridge, or any other machine capable of executing a set of instructions (sequential or otherwise) that specify actions to be taken by that machine. In a particular implementation, the controller 300 can be implemented using electronic devices that provide voice, video, or data communication. Further, while the controller 300 is illustrated as a single system, the term "system" shall also be taken to include any collection of systems or sub-systems that individually or jointly execute a set, or multiple sets, of instructions to perform one or more computer functions.

As shown in FIG. 3, the controller 300 may include a processor 302, e.g., a central processing unit (CPU), a graphics processing unit (GPU), or both. The processor 302 may be a component in a variety of systems. For example, the processor 302 may be part of a standard inverter. The processor 302 may be one or more general processors, digital signal processors, application specific integrated circuits, field programmable gate arrays, servers, networks, digital circuits, analog circuits, combinations thereof, or other now known or later developed devices for analyzing and processing data. The processor 302 may implement a software program, such as code generated manually (i.e., programmed).

The controller 300 may include a memory 304 that can communicate via a bus 308. The memory 304 may be a main memory, a static memory, or a dynamic memory. The memory 304 may include, but is not limited to computer readable storage media such as various types of volatile and non-volatile storage media, including but not limited to random access memory, read-only memory, programmable read-only memory, electrically programmable read-only memory, electrically erasable read-only memory, flash memory, magnetic tape or disk, optical media and the like. In one implementation, the memory 304 includes a cache or random-access memory for the processor 302. In alternative implementations, the memory 304 is separate from the processor 302, such as a cache memory of a processor, the system memory, or other memory. The memory 304 may be an external storage device or database for storing data. Examples include a hard drive, compact disc ("CD"), digital video disc ("DVD"), memory card, memory stick, floppy disc, universal serial bus ("USB") memory device, or any other device operative to store data. The memory 304 is operable to store instructions executable by the processor 302. The functions, acts or tasks illustrated in the figures or described herein may be performed by the processor 302 executing the instructions stored in the memory 304. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the controller 300 may further include a display 310, such as a liquid crystal display (LCD), an organic light emitting diode (OLED), a flat panel display, a solid-state display, a cathode ray tube (CRT), a projector, a printer or other now known or later developed display device for outputting determined information. The display 310 may act as an interface for the user to see the functioning of the processor 302, or specifically as an interface with the software stored in the memory 304 or in the drive unit 306.

Additionally or alternatively, the controller 300 may include an input device 312 configured to allow a user to interact with any of the components of controller 300. The input device 312 may be a number pad, a keyboard, or a cursor control device, such as a mouse, or a joystick, touch screen display, remote control, or any other device operative to interact with the controller 300.

The controller 300 may also or alternatively include drive unit 306 implemented as a disk or optical drive. The drive unit 306 may include a computer-readable medium 322 in which one or more sets of instructions 324, e.g. software, can be embedded. Further, the instructions 324 may embody one or more of the methods or logic as described herein. The instructions 324 may reside completely or partially within the memory 304 and/or within the processor 302 during execution by the controller 300. The memory 304 and the processor 302 also may include computer-readable media as discussed above.

In some systems, a computer-readable medium 322 includes instructions 324 or receives and executes instructions 324 responsive to a propagated signal so that a device connected to a network 370 can communicate voice, video, audio, images, or any other data over the network 370. Further, the instructions 324 may be transmitted or received over the network 370 via a communication port or interface 320, and/or using a bus 308. The communication port or interface 320 may be a part of the processor 302 or may be a separate component. The communication port or interface 320 may be created in software or may be a physical connection in hardware. The communication port or interface 320 may be configured to connect with a network 370, external media, the display 310, or any other components in controller 300, or combinations thereof. The connection with the network 370 may be a physical connection, such as a wired Ethernet connection or may be established wirelessly as discussed below. Likewise, the additional connections with other components of the controller 300 may be physical connections or may be established wirelessly. The network 370 may alternatively be directly connected to a bus 308.

While the computer-readable medium 322 is shown to be a single medium, the term "computer-readable medium" may include a single medium or multiple media, such as a centralized or distributed database, and/or associated caches and servers that store one or more sets of instructions. The term "computer-readable medium" may also include any medium that is capable of storing, encoding, or carrying a set of instructions for execution by a processor or that cause a computer system to perform any one or more of the methods or operations disclosed herein. The computer-readable medium 322 may be non-transitory, and may be tangible.

The computer-readable medium 322 can include a solid-state memory such as a memory card or other package that houses one or more non-volatile read-only memories. The computer-readable medium 322 can be a random-access memory or other volatile re-writable memory. Additionally or alternatively, the computer-readable medium 322 can include a magneto-optical or optical medium, such as a disk or tapes or other storage device to capture carrier wave signals such as a signal communicated over a transmission medium. A digital file attachment to an e-mail or other self-contained information archive or set of archives may be considered a distribution medium that is a tangible storage medium. Accordingly, the disclosure is considered to include any one or more of a computer-readable medium or a distribution medium and other equivalents and successor media, in which data or instructions may be stored.

In an alternative implementation, dedicated hardware implementations, such as application specific integrated circuits, programmable logic arrays and other hardware devices, can be constructed to implement one or more of the methods described herein. Applications that may include the apparatus and systems of various implementations can broadly include a variety of electronic and computer systems. One or more implementations described herein may implement functions using two or more specific interconnected hardware modules or devices with related control and data signals that can be communicated between and through the modules, or as portions of an application-specific integrated circuit. Accordingly, the present system encompasses software, firmware, and hardware implementations.

The controller 300 may be connected to a network 370. The network 370 may define one or more networks including wired or wireless networks. The wireless network may be a cellular telephone network, an 802.11, 802.16, 802.20, or WiMAX network. Further, such networks may include a public network, such as the Internet, a private network, such as an intranet, or combinations thereof, and may utilize a variety of networking protocols now available or later developed including, but not limited to TCP/IP based networking protocols. The network 370 may include wide area networks (WAN), such as the Internet, local area networks (LAN), campus area networks, metropolitan area networks, a direct connection such as through a Universal Serial Bus (USB) port, or any other networks that may allow for data communication. The network 370 may be configured to couple one computing device to another computing device to enable communication of data between the devices. The network 370 may generally be enabled to employ any form of machine-readable media for communicating information from one device to another. The network 370 may include communication methods by which information may travel between computing devices. The network 370 may be divided into sub-networks. The sub-networks may allow access to all of the other components connected thereto or the sub-networks may restrict access between the components. The network 370 may be regarded as a public or private network connection and may include, for example, a virtual private network or an encryption or other security mechanism employed over the public Internet, or the like.

In accordance with various implementations of the present disclosure, the methods described herein may be implemented by software programs executable by a computer system. Further, in an exemplary, non-limited implementation, implementations can include distributed processing, component or object distributed processing, and parallel processing. Alternatively, virtual computer system processing can be constructed to implement one or more of the methods or functionality as described herein.

Although the present specification describes components and functions that may be implemented in particular implementations with reference to particular standards and protocols, the disclosure is not limited to such standards and protocols. For example, standards for Internet and other packet switched network transmission (e.g., TCP/IP, UDP/IP, HTML, HTTP) represent examples of the state of the art. Such standards are periodically superseded by faster or more efficient equivalents having essentially the same functions. Accordingly, replacement standards and protocols having the same or similar functions as those disclosed herein are considered equivalents thereof.

It will be understood that the operations of methods discussed are performed in one embodiment by an appropriate processor (or processors) of a processing (i.e., computer) system executing instructions (computer-readable code) stored in storage. It will also be understood that the disclosure is not limited to any particular implementation or programming technique and that the disclosure may be implemented using any appropriate techniques for implementing the functionality described herein. The disclosure is not limited to any particular programming language or operating system.

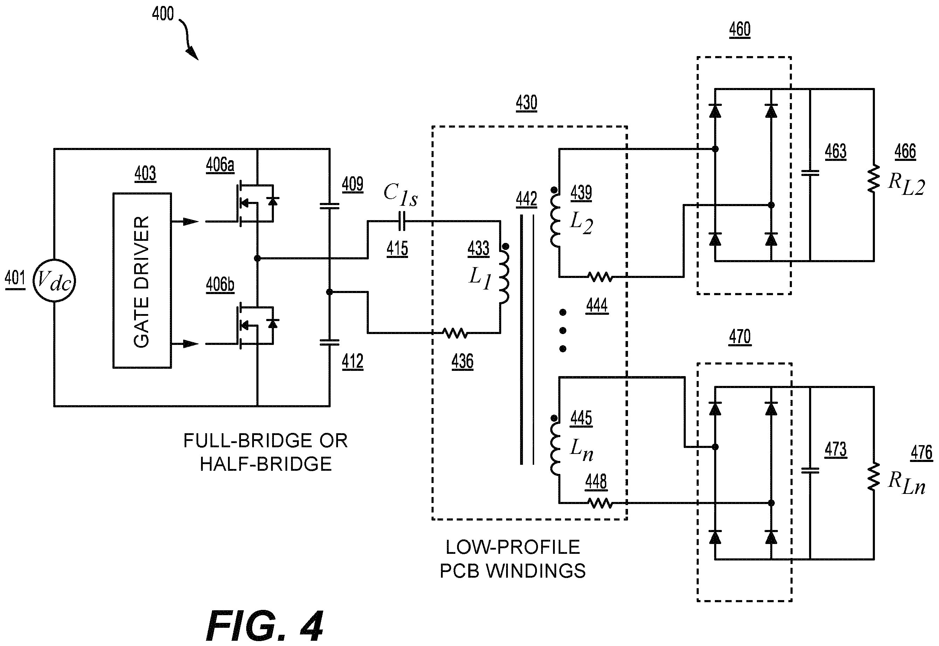

FIG. 4 depicts an exemplary power converter system 400 ("converter system 400") in accordance with one or more embodiments described herein. Converter system 400 may be an implementation of power supply 120, for example. The converter system 400 may include a gate driver 403, a planar transformer 430, a first diode set 460, a second diode set 470, a first load 466, and a second load 476. The first load 466 and the second load 476 may include power modules, for example. The first load 466 and the second load 476 may also include gate-source capacitors of semiconductor switches and other components of the gate driver circuits. The converter system 400 is not exhaustively illustrated, and the converter system 400 may include other components although not shown. Alternatively, one or more of the components of the converter system 400 shown in FIG. 4 may be omitted in some cases.

The gate driver 403 may be embodied as a single gate driver and may be controlled by a controller (e.g., controller 300) to send signals to control a first switch 406a and a second switch 406b, which may feed power to the planar transformer 430. As shown, the first switch 406a and the second switch 406b may be connected to a DC power supply 401 and receive inputs from the gate driver 403.

The first switch 406a and the second switch 406b may be embodied as any suitable type of semiconductor (or other) power switches, such as power bipolar transistors or power insulated gate bipolar transistors (IGBTs), among others, depending upon the switching frequency of converter system 400 and other factors. For higher speed switching operations according to aspects of the embodiments described herein, the first switch 406a and the second switch 406b may be embodied as metal oxide semiconductor field effect transistors (MOSFETs), such as silicon carbide (SiC) MOSFETs. The topology or arrangement of the first switch 406a and the second switch 406b may be full bridge, semi full bridge, half bridge, or another topology or arrangement.

The planar transformer 430 may include a primary coil 433, a ferrite shielding core 442, a first secondary coil 439, and a second secondary coil 445. The primary coil 433, the first secondary coil 439, and the second secondary coil 445 may include flat windings implemented on a printed circuit board (PCB), which may save volume in space restricted applications. The ferrite shielding core 442 may encapsulate the primary coil 433, the first secondary coil 439, and the second secondary coil 445, and provide shielding for electromagnetic interference for the planar transformer 430. The planar transformer 430 is not exhaustively illustrated and may include other components although not shown. Alternatively, some components may be omitted although shown. For example, the planar transformer 430 may include more than one primary coil and omit the ferrite shielding core 442 depending on the application for use of the planar transformer 430.

The primary coil 433 may be connected to the first switch 406a and the second switch 406b. The primary coil 433 may be connected to primary capacitor 415 and a first resistor 436. The first resistor 436 may be connected to a first capacitor 409 and a second capacitor 412. The first capacitor 409 and the second capacitor 412 may be connected to the DC power supply 401. During operation, the primary coil 433 may be used to transfer power to the first secondary coil 439 and the second secondary coil 445. Although two secondary coils 439 and 445 are illustrated, the primary coil 433 may be used to transfer power to more than two secondary windings. For example, the planar transformer 430 may include any number of secondary coils corresponding to the number of outputs needed, depending on the application for use of the converter system 400.

The first secondary coil 439 and the second secondary coil 445 may transfer power to the first load 466 and the second load 476, respectively, through the first diode set 460 and the second diode set 470, respectively. The first diode set 460 and the first load 466 may be connected to capacitor 463. The first diode set 460 and the first secondary coil 439 may be connected to a second resistor 444. The second diode set 470 and the second load 476 may be connected to capacitor 473. The second diode set 470 and the second secondary coil 445 may be connected to a third resistor 448. The resistors and capacitors in FIG. 4 may be discrete components, or may be parasitic components of the circuit.

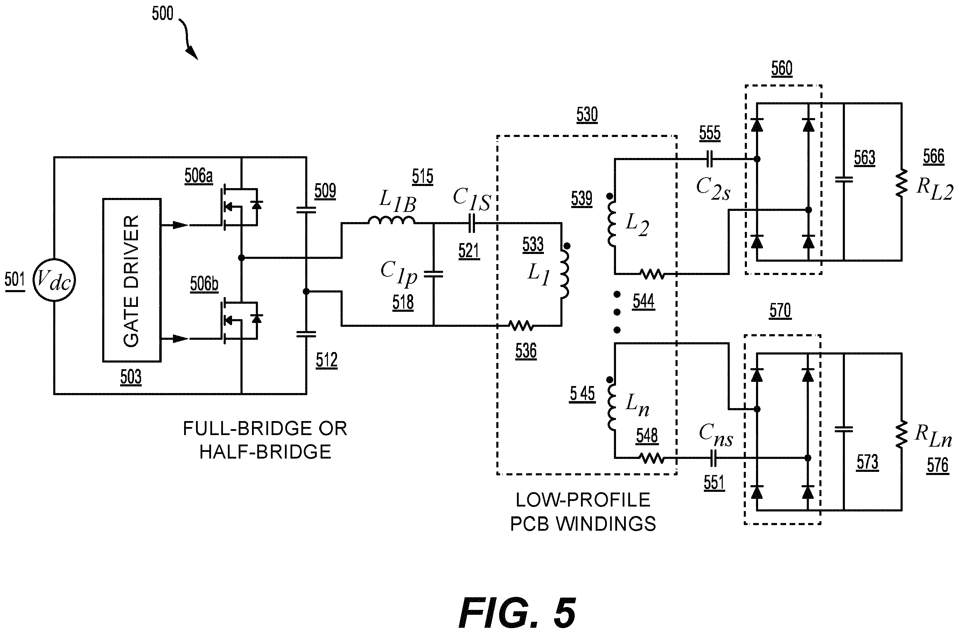

FIG. 5 depicts an exemplary power converter system 500 ("converter system 500") in accordance with one or more embodiments described herein. Converter system 500 may be an implementation of power supply 120, for example. The converter system 500 may include a gate driver 503, a planar transformer 530, a first diode set 560, a second diode set 570, a first load 566, and a second load 576. The first load 566 and the second load 576 may include power modules, for example. The converter system 500 is not exhaustively illustrated, and the converter system 500 may include other components although not shown. Alternatively, one or more of the components of the converter system 500 shown in FIG. 5 may be omitted in some cases.

The gate driver 503 may be embodied as a single gate driver and may be controlled by a controller (e.g., PWM controller) to send signals to control a first switch 506a and a second switch 506b, which may feed power to the planar transformer 530. As shown, the first switch 506a and the second switch 506b may be connected to a DC power supply 501 and receive inputs from the gate driver 503. The first switch 506a and the second switch 506b may be connected to a first capacitor 509 and a second capacitor 512, respectively.

The first switch 506a and the second switch 506b may be embodied as any suitable type of semiconductor (or other) power switches, such as power bipolar transistors or power insulated gate bipolar transistors (IGBTs), among others, depending upon the switching frequency of converter system 500 and other factors. For higher speed switching operations according to aspects of the embodiments described herein, the first switch 506a and the second switch 506b may be embodied as metal oxide semiconductor field effect transistors (MOSFETs), such as silicon carbide (SiC) MOSFETs. The topology or arrangement of the first switch 506a and the second switch 506b may be full bridge, semi full bridge, half bridge, or another topology or arrangement.

The planar transformer 530 may include a primary coil 533, a first secondary coil 539, and a second secondary coil 545. The primary coil 533, the first secondary coil 539, and the second secondary coil 545 may include flat windings implemented on a printed circuit board (PCB), which may save volume in space restricted applications. The planar transformer 530 may omit a ferrite shielding core and include an electromagnetic shielding coil, which will be discussed in further detail with respect to the later figures. By omitting the ferrite shielding core, material cost and assembly cost of the planar transformer 530 may be reduced. The planar transformer 530 is not exhaustively illustrated and may include other components although not shown. Alternatively, some components may be omitted although shown. For example, the planar transformer 530 may include more than one primary coil and include a ferrite depending on the application for use of the planar transformer 530.

The primary coil 533 may be connected to the first switch 506a and the second switch 506b. The primary coil 533 may be connected to a first primary capacitor 521 and a first resistor 536. The first primary capacitor 521 may be connected to inductor 515 and second primary capacitor 518. The first resistor 536 may be connected to the second primary capacitor 518, the first capacitor 509, and the second capacitor 512. During operation, the primary coil 533 may be used to transfer power to the first secondary coil 539 and the second secondary coil 545. Although two secondary coils (first secondary coil 539 and second secondary coil 545) are illustrated, the primary coil 533 may be used to transfer power to more than two secondary windings. For example, the planar transformer 530 may include any number of secondary coils corresponding to the number of outputs needed, depending on the application for use of the converter system 500.

The first secondary coil 539 and the second secondary coil 545 may transfer power to the first load 566 and the second load 576, respectively, through the first diode set 560 and the second diode set 570, respectively. The first diode set 560 and the first load 566 may be connected to a third capacitor 563. The first secondary coil 539 and the first diode set 560 may be connected to a first secondary capacitor 555. The first secondary coil 539 may be connected to a second resistor 544. The second diode set 570 and the second load 576 may be connected to a fourth capacitor 573. The second secondary coil 545 may be connected to a third resistor 548. The third resistor 548 and the second diode set 570 may be connected to a second secondary capacitor 551. The resistors and capacitors in FIG. 5 may be discrete components, or may be parasitic components of the circuit.

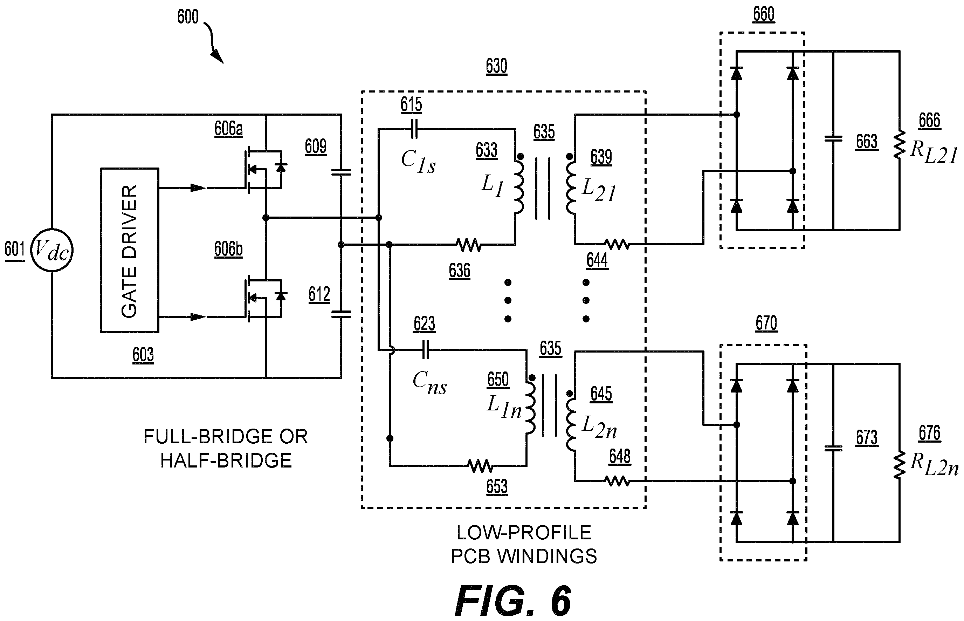

FIG. 6 depicts an exemplary power converter system 600 ("converter system 600") in accordance with one or more embodiments described herein. Converter system 600 may be an implementation of power supply 120, for example. The converter system 600 may include implementation of a gate driver 603, a planar transformer 630, a first diode set 660, a second diode set 670, a first load 666, and a second load 676. The first load 666 and the second load 676 may include power modules, for example. The converter system 600 is not exhaustively illustrated, and the converter system 600 may include other components although not shown. Alternatively, one or more of the components of the converter system 600 shown in FIG. 6 may be omitted in some cases.

The gate driver 603 may be embodied as a single gate driver and may be controlled by a controller (*e.g.,* PWM controller) to send signals to control a first switch 606a and a second switch 606b, which may feed power to the planar transformer 630. As shown, the first switch 606a and the second switch 606b may be connected to a DC power supply 601 and receive inputs from the gate driver 603. The first switch 606a and the second switch 606b may be connected to a first capacitor 609 and a second capacitor 612, respectively.

The first switch 606a and the second switch 606b may be embodied as any suitable type of semiconductor (or other) power switches, such as power bipolar transistors or power insulated gate bipolar transistors (IGBTs), among others, depending upon the switching frequency of converter system 600 and other factors. For higher speed switching operations according to aspects of the embodiments described herein, the first switch 606a and the second switch 606b may be embodied as metal oxide semiconductor field effect transistors (MOSFETs), such as silicon carbide (SiC) MOSFETs. The topology or arrangement of the first switch 606a and the second switch 606b may be full bridge, semi full bridge, half bridge, or another topology or arrangement.

The planar transformer 630 may include a first primary coil 633, a second primary coil 650, a first secondary coil 639, a second secondary coil 645, and a ferrite shielding core 635. The first primary coil 633, the second primary coil 650, the first secondary coil 639, and the second secondary coil 645 may include flat windings implemented on a printed circuit board (PCB), which may save volume in space restricted applications. The ferrite shielding core 635 may encapsulate the first primary coil 633, the second primary coil 650, the first secondary coil 639, and the second secondary coil 645, and provide shielding for electromagnetic interference for the planar transformer 630. The planar transformer 630 is not exhaustively illustrated and may include other components although not shown. Alternatively, some components may be omitted although shown. For example, the planar transformer 630 may include less than one primary coil and omit the ferrite shielding core 635 depending on the application for use of the planar transformer 630.

The first primary coil 633 and the second primary coil 650 may be connected to the first switch 606a and the second switch 606b. The first primary coil 633 may be connected to a first primary capacitor 615 and a first resistor 636. The first resistor 636 may be connected to the first capacitor 609 and the second capacitor 612. The second primary coil 650 may be connected to a second primary capacitor 623 and a second resistor 653. The second resistor 653 may be connected to the first capacitor 609, the second capacitor 612, and the first resistor 636.

During operation, the first primary coil 633 and the second primary coil 650 may be used to transfer power to the first secondary coil 639 and the second secondary coil 645, respectively. Although two primary coils 633 and 650 and two secondary coils 639 and 645 are illustrated, more than two primary and two secondary coils may be implemented in the converter system 600. For example, the planar transformer 630 may include any number of primary coils and an equal number of secondary coils (*e.g.,* three primary and three secondary, four primary and four secondary, *etc*.) corresponding to the number of outputs needed, depending on the application for use of the converter system 600.

The first secondary coil 639 and the second secondary coil 645 may transfer power to the first load 666 and the second load 676, respectively, through the first diode set 660 and the second diode set 670, respectively. The first diode set 660 and the first load 666 may be connected to a third capacitor 663. The first secondary coil 639 and the first diode set 660 may be connected to a third resistor 644. The second diode set 670 and the second load 676 may be connected to a fourth capacitor 673. The second secondary coil 645 and the second diode set 670 may be connected to a fourth resistor 648. The resistors and capacitors in FIG. 6 may be discrete components, or may be parasitic components of the circuit.

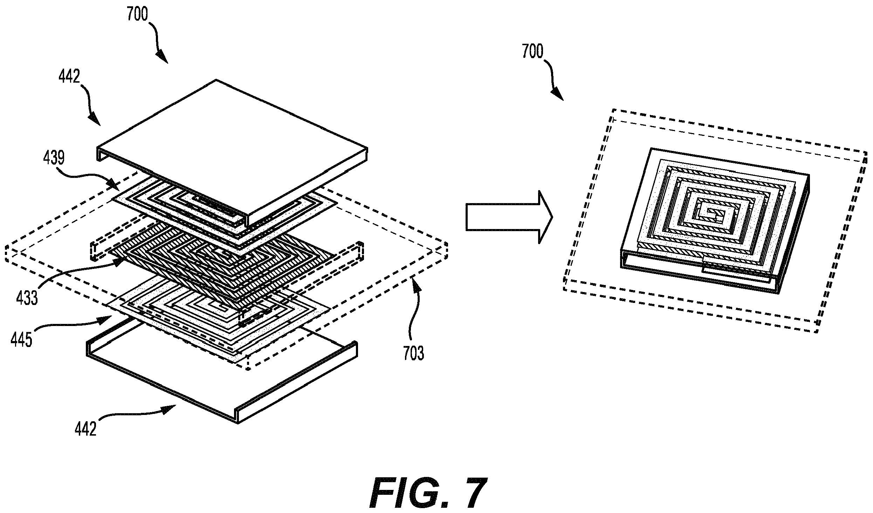

FIG. 7 depicts an exemplary planar transformer 700 that may be implemented in the converter system 400, the converter system 500, and the converter system 600 in accordance with one or more embodiments described herein. The planar transformer 700 may include many of the same components as the planar transformer 430, the planar transformer 530, and the planar transformer 630 and may be interchangeable with the planar transformer 430, the planar transformer 530, and the planar transformer 630 for use in the converter system 400, the converter system 500, and the converter system 600, according to one or more examples. The planar transformer 700 may include a primary coil 433, a first secondary coil 439, a second secondary coil 445, and a ferrite shielding core 442, which all may be implemented in one or more layers of a printed circuit board (PCB) 703.

The primary coil 433 may be in or on a first layer of the PCB 703. The primary coil 433 may be embedded in a first layer of the PCB 703 with copper traces to connect to other components (*e.g.,* the first switch 406a and the second switch 406b) of the converter system 400, as shown in FIG. 4. The first secondary coil 439 and the second secondary coil 445 may be in or on one or more second layers of the PCB 703, different from the first layer. For example, the first secondary coil 439 may be in or on a second layer of the PCB 703, and the second secondary coil 445 may be in or on a different second layer from that of the first secondary coil 439. Similar to that of the primary coil 433, the first secondary coil 439 and the second secondary coil 445 may be embedded in one or more second layers of the PCB 703 with copper traces to connect to other components (*e.g.,* the first diode set 460, the second diode set 470, the first load 466, and the second load 476, *etc.)* of the converter system 400, as shown in FIG. 4, according to one or more examples.

The ferrite shielding core 442 may be in or on one or more third layers of the PCB 703. For example, the ferrite shielding core 442 may be embedded in one or more third layers of the PCB 703, different from that of the primary coil 433, the first secondary coil 439, and the second secondary coil 445. The ferrite shielding core 442 may include ferrite material, which may have high magnetic permeability with low electrical conductivity, allowing the ferrite shielding core 442 to prevent eddy currents induced by the primary coil 433, the first secondary coil 439, and the second secondary coil 445. The ferrite shielding core 442 may provide a shield for electromagnetic interference for the planar transformer 700. The ferrite shielding core 442 may be in one or more third layers of the PCB 703 without copper traces and may encapsulate the primary coil 433, the first secondary coil 439, and the second secondary coil 445, as shown in FIG. 7.

As shown in FIG. 7, an outer perimeter of the first primary coil 433, an outer perimeter of the first secondary coil 439, and an outer perimeter of the second secondary coil 445 may be square-like in shape. The outer perimeter of the primary coil 433 may be equal to an outer perimeter of the first secondary coil 439. The outer perimeter of the primary coil 433 may be equal to the outer perimeter of the second secondary coil 445.

As shown in FIG. 7, the first secondary coil 439 may be on a first side of the first primary coil 433 in a first second layer of the PCB 703. The second secondary coil 445 may be on a second side of the first primary coil 433 in a different second layer of the PCB 703, where the first side of the first primary coil 433 may be opposite to the second side of the first primary coil 433. For example, the first secondary coil 439 may be stacked on a first side of the primary coil 433, and the second secondary coil 445 may be stacked on a second side of the primary coil 433, with the first side being opposite to the second side. The coil arrangement of the first primary coil 433, the first secondary coil 439, and the second secondary coil 445 may include a sandwiched coil arrangement as shown in FIG. 7.

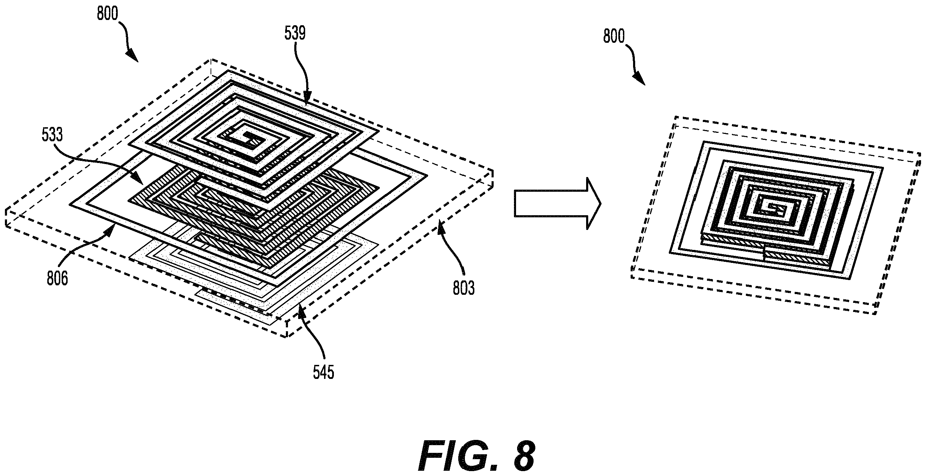

FIG. 8 depicts an exemplary planar transformer 800 that may be implemented in the converter system 400, the converter system 500, and the converter system 600 in accordance with one or more embodiments described herein. The planar transformer 800 may include many of the same components as the planar transformer 430, the planar transformer 530, and the planar transformer 630 and may be interchangeable with the planar transformer 430, the planar transformer 530, and the planar transformer 630 for use in the converter system 400, the converter system 500, and the converter system 600, according to one or more examples. The planar transformer 800 may include a primary coil 533, a first secondary coil 539, a second secondary coil 545, and an electromagnetic shielding coil 806, which all may be implemented in one or more layers of a printed circuit board (PCB) 803.

The primary coil 533 may be in or on a first layer of the PCB 803. The primary coil 533 may be embedded in a first layer of the PCB 803 with copper traces to connect to other components (*e.g.,* the first switch 506a and the second switch 506b) of the converter system 500, as shown in FIG. 5. The first secondary coil 539 and the second secondary coil 545 may be in or on one or more second layers of the PCB 803, different from the first layer. For example, the first secondary coil 539 may be in or on a second layer of the PCB 803, and the second secondary coil 545 may be in or on a different second layer from that of the first secondary coil 539. Similar to that of the primary coil 533, the first secondary coil 539 and the second secondary coil 545 may be embedded in one or more second layers of the PCB 803 with copper traces to connect to other components (*e.g.,* the first diode set 560, the second diode set 570, the first load 566, and the second load 576, *etc.)* of the converter system 500, as shown in FIG. 5, according to one or more examples.

The electromagnetic shielding coil 806 may be in or on the first layer of the PCB 803 with the primary coil 533. However, the electromagnetic shielding coil 806 is not restricted to just the first layer and may be in or on the one or more second layers of the PCB 803. For example, the electromagnetic shielding coil 806 may be embedded in one or more second layers of the PCB 803, different from that of the primary coil 533, the first secondary coil 539, and the second secondary coil 545, depending on the application for use of the planar transformer 800. The electromagnetic shielding coil 806 may include flat windings and may provide a shield for electromagnetic interference for the planar transformer 800.

The electromagnetic shielding coil 806 may have an outer perimeter larger than an outer perimeter of the primary coil 533, as shown in FIG. 8. The outer perimeter of the electromagnetic shielding coil 806 may be larger than an outer perimeter of the first secondary coil 539. The outer perimeter of the electromagnetic shielding coil 806 may be larger than an outer perimeter of the second secondary coil 545. The outer perimeter of the electromagnetic shielding coil 806 may surround the outer perimeter of the primary coil 533. The outer perimeter of the first primary coil 533 may be equal to the outer perimeter of the first secondary coil 539. The outer perimeter of the first primary coil 533 may be equal to the outer perimeter of the second secondary coil 545. The outer perimeter of the first primary coil 533, the first secondary coil 539, and the second secondary coil 545 may be square-like in shape.

As shown in FIG. 8, the first secondary coil 539 may be on a first side of the first primary coil 533 in a first second layer of the PCB 803. The second secondary coil 545 may be on a second side of the first primary coil 533 in a different second layer of the PCB 803, where the first side of the first primary coil 533 may be opposite to the second side of the first primary coil 533. For example, the first secondary coil 539 may be stacked on a first side of the primary coil 533, and the second secondary coil 545 may be stacked on a second side of the primary coil 533, with the first side being opposite to the second side. The coil arrangement of the first primary coil 533, the first secondary coil 539, and the second secondary coil 545 may include a sandwiched coil arrangement as shown in FIG. 8.

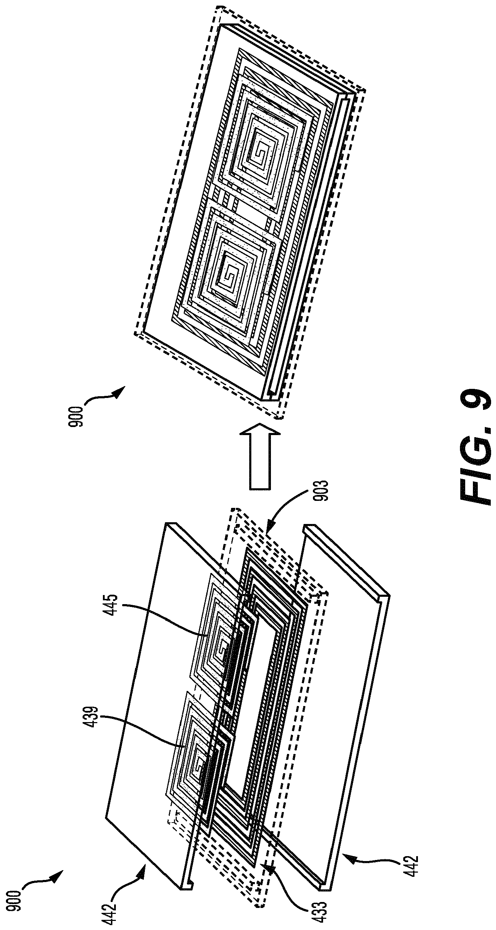

FIG. 9 depicts an exemplary planar transformer 900 that may be implemented in the converter system 400, the converter system 500, and the converter system 600 in accordance with one or more embodiments described herein. The planar transformer 900 may include many of the same components as the planar transformer 430, the planar transformer 530, and the planar transformer 630 and may be interchangeable with the planar transformer 430, the planar transformer 530, and the planar transformer 630 for use in the converter system 400, the converter system 500, and the converter system 600, according to one or more examples. The planar transformer 900 may include a primary coil 433, a first secondary coil 439, a second secondary coil 445, and a ferrite shielding core 442, which all may be implemented in one or more layers of a printed circuit board (PCB) 903.

The primary coil 433 may be in or on a first layer of the PCB 903. The primary coil 433 may be embedded in a first layer of the PCB 903 with copper traces to connect to other components (*e.g.,* the first switch 406a and the second switch 406b) of the converter system 400, as shown in FIG. 4. The first secondary coil 439 and the second secondary coil 445 may be in or on one or more second layers of the PCB 903, different from the first layer. Similar to that of the primary coil 433, the first secondary coil 439 and the second secondary coil 445 may be embedded in one or more second layers of the PCB 903 with copper traces to connect to other components (*e.g.,* the first diode set 460, the second diode set 470, the first load 466, and the second load 476, *etc*.) of the converter system 400, as shown in FIG. 4, according to one or more examples.

The ferrite shielding core 442 may be in or on one or more third layers of the PCB 903. For example, the ferrite shielding core 442 may be embedded in one or more third layers of the PCB 903, different from that of the primary coil 433, the first secondary coil 439, and the second secondary coil 445. The ferrite shielding core 442 may include ferrite material, which may have high magnetic permeability with low electrical conductivity, allowing the ferrite shielding core 442 to prevent eddy currents induced by the primary coil 433, the first secondary coil 439, and the second secondary coil 445. The ferrite shielding core 442 may provide a shield for electromagnetic interference for the planar transformer 900. The ferrite shielding core 442 may be in one or more third layers of the PCB 903 without copper traces and may encapsulate the primary coil 433, the first secondary coil 439, and the second secondary coil 445, as shown in FIG. 9.

The first primary coil 433 may have an outer perimeter that may be rectangular-like in shape. Each of the first secondary coil 439 and the second secondary coil 445 may have an outer perimeter that may be square-like in shape. The outer perimeter of the primary coil 433 may be larger than a total outer perimeter that may include the outer perimeter of the first secondary coil 439 and the outer perimeter of the second secondary coil 445.

The first secondary coil 439 and the second secondary coil 445 may be on one side of the primary coil 433. For example, the first secondary coil 439 and the second secondary coil 445 may be stacked on a same side of the first primary coil 433. The first secondary coil 439 and the second secondary coil 445 may be stacked on the same side of the first primary coil 433 in a side-by-side configuration.

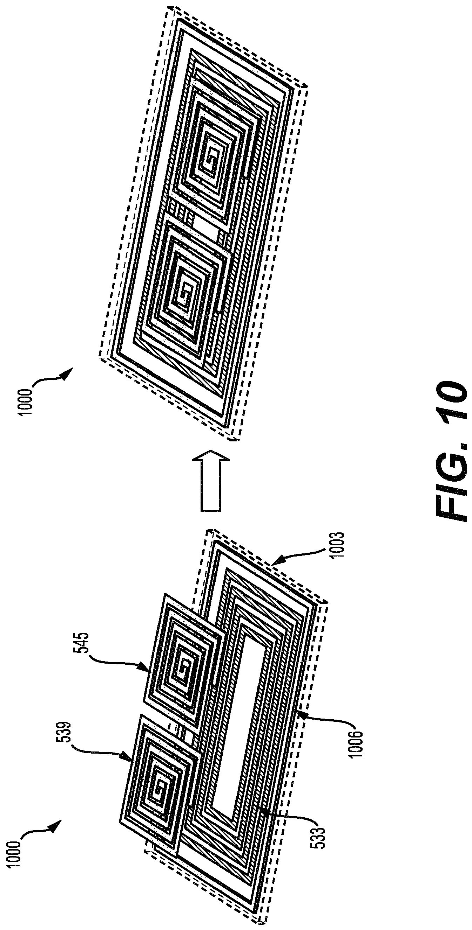

FIG. 10 depicts an exemplary planar transformer 1000 that may be implemented in the converter system 400, the converter system 500, and the converter system 600 in accordance with one or more embodiments described herein. The planar transformer 1000 may include many of the same components as the planar transformer 430, the planar transformer 530, and the planar transformer 630 and may be interchangeable with the planar transformer 430, the planar transformer 530, and the planar transformer 630 for use in the converter system 400, the converter system 500, and the converter system 600, according to one or more examples. The planar transformer 1000 may include a primary coil 533, a first secondary coil 539, a second secondary coil 545, and an electromagnetic shielding coil 1006, which all may be implemented in one or more layers of a printed circuit board (PCB) 1003.

The primary coil 533 may be in or on a first layer of the PCB 1003. The primary coil 533 may be embedded in a first layer of the PCB 1003 with copper traces to connect to other components (*e.g.,* the first switch 506a and the second switch 506b) of the converter system 500, as shown in FIG. 5. The first secondary coil 539 and the second secondary coil 545 may be in or on one or more second layers of the PCB 1003, different from the first layer. Similar to that of the primary coil 533, the first secondary coil 539 and the second secondary coil 545 may be embedded in one or more second layers of the PCB 1003 with copper traces to connect to other components (*e.g.,* the first diode set 560, the second diode set 570, the first load 566, and the second load 576, *etc*.) of the converter system 500, as shown in FIG. 5, according to one or more examples.

The electromagnetic shielding coil 1006 may be in or on the first layer of the PCB 1003 with the primary coil 533. However, the electromagnetic shielding coil 1006 is not restricted to just the first layer and may be in or on the one or more second layers of the PCB 1003. For example, the electromagnetic shielding coil 1006 may be embedded in one or more second layers of the PCB 1003, different from that of the primary coil 533, the first secondary coil 539, and the second secondary coil 545, depending on the application for use of the planar transformer 1000. The electromagnetic shielding coil 1006 may include flat windings and may provide a shield for electromagnetic interference for the planar transformer 1000.

The electromagnetic shielding coil 1006 may have an outer perimeter larger than an outer perimeter of the primary coil 533, as shown in FIG. 10. The outer perimeter of the electromagnetic shielding coil 1006 may be larger than a total outer perimeter of an outer perimeter of the first secondary coil 539 and an outer perimeter of the second secondary coil 545. The outer perimeter of the electromagnetic shielding coil 1006 may surround the outer perimeter of the primary coil 533.

The first primary coil 533 may have an outer perimeter that may be rectangular-like in shape. Each of the outer perimeter of the first secondary coil 539 and the outer perimeter of the second secondary coil 545 may be square-like in shape. The outer perimeter of the primary coil 533 may be larger than the total outer perimeter that may include the outer perimeter of the first secondary coil 539 and the outer perimeter of the second secondary coil 545.

The first secondary coil 539 and the second secondary coil 545 may be on one side of the primary coil 533. For example, the first secondary coil 539 and the second secondary coil 545 may be stacked on a same side of the first primary coil 533. The first secondary coil 539 and the second secondary coil 545 may be stacked on the same side of the first primary coil 533 in a side-by-side configuration.

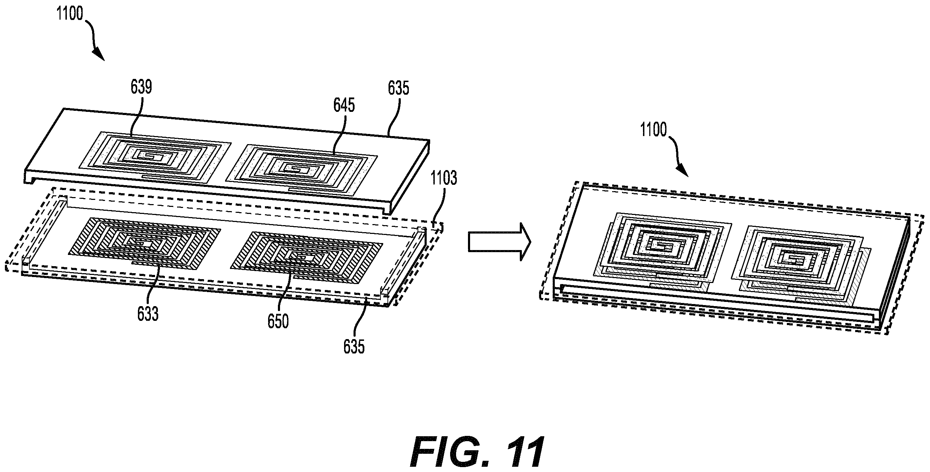

FIG. 11 depicts an exemplary planar transformer 1100 that may be implemented in the converter system 400, the converter system 500, and the converter system 600 in accordance with one or more embodiments described herein. The planar transformer 1100 may include many of the same components as the planar transformer 430, the planar transformer 530, and the planar transformer 630 and may be interchangeable with the planar transformer 430, the planar transformer 530, and the planar transformer 630 for use in the converter system 400, the converter system 500, and the converter system 600, according to one or more examples. The planar transformer 1100 may include a first primary coil 633, a second primary coil 650, a first secondary coil 639, a second secondary coil 645, and a ferrite shielding core 635, which all may be implemented in one or more layers of a printed circuit board (PCB) 1103.

The first primary coil 633 and the second primary coil 650 may be in or on a first layer of the PCB 1103. The first primary coil 633 and the second primary coil 650 may be embedded in a first layer of the PCB 1103 with copper traces to connect to other components (*e.g.,* the first switch 606a and the second switch 606b) of the converter system 600, as shown in FIG. 6. The first secondary coil 639 and the second secondary coil 645 may be in or on one or more second layers of the PCB 1103, different from the first layer. Similar to that of the first primary coil 633 and the second primary coil 650, the first secondary coil 639 and the second secondary coil 645 may be embedded in one or more second layers of the PCB 1103 with copper traces to connect to other components (*e.g.,* the first diode set 660, the second diode set 670, the first load 666, and the second load 676, *etc.)* of the converter system 600, as shown in FIG. 6, according to one or more examples.

The ferrite shielding core 635 may be in or on one or more third layers of the PCB 1103. For example, the ferrite shielding core 635 may be embedded in one or more third layers of the PCB 1103, different from that of the first primary coil 633, the second primary coil 650, the first secondary coil 639, and the second secondary coil 645. The ferrite shielding core 635 may include ferrite material, which may have high magnetic permeability with low electrical conductivity, allowing the ferrite shielding core 635 to prevent eddy currents induced by the first primary coil 633, the second primary coil 650, the first secondary coil 639, and the second secondary coil 645. The ferrite shielding core 635 may provide a shield for electromagnetic interference for the planar transformer 1100. The ferrite shielding core 635 may be in one or more third layers of the PCB 1103 without copper traces and may encapsulate the first primary coil 633, the second primary coil 650, the first secondary coil 639, and the second secondary coil 645, as shown in FIG. 11.

The first primary coil 633 and the second primary coil 650 may have an outer perimeter that may be square-like in shape. The outer perimeter of the first primary coil 633 and the outer perimeter of the second primary coil 650 may be equal. The first secondary coil 639 and the second secondary coil 645 may have an outer perimeter that may be square-like in shape. The outer perimeter of first secondary coil 639 and the outer perimeter of the second secondary coil 645 may be equal. The outer perimeters of the first primary coil 633, the second primary coil 650, the first secondary coil 639, and the second secondary coil 645 may be equal.

The first secondary coil 639 may be on one side of the first primary coil 633, and the second secondary coil 645 may be on one side of the second primary coil 650. For example, the first secondary coil 639 may be stacked on one side of the first primary coil 633, and the second secondary coil 645 may be stacked on one side of the second primary coil 650. The first primary coil 633 and the second primary coil 650 may be in a side-by-side configuration in the PCB 1103. The first secondary coil 639 and the second secondary coil 645 may be in a side-by-side configuration in the PCB 1103.

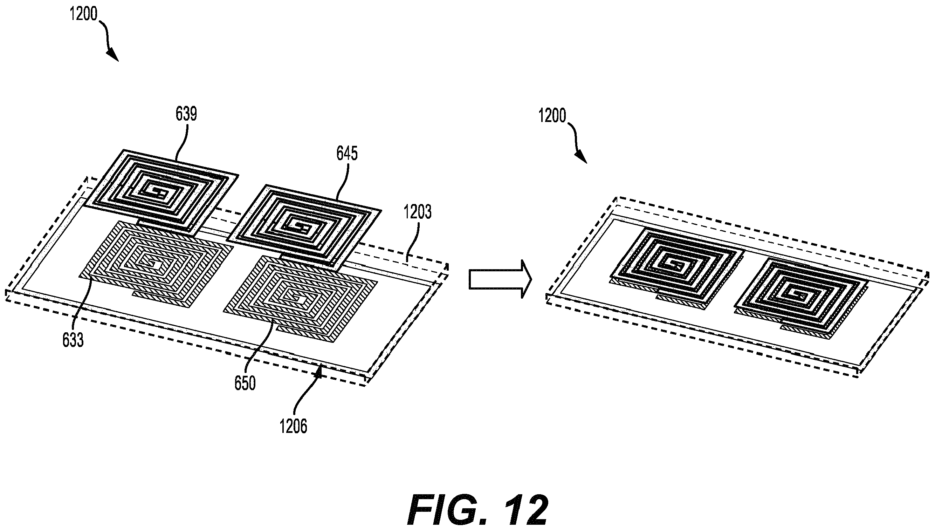

FIG. 12 depicts an exemplary planar transformer 1200 that may be implemented in the converter system 400, the converter system 500, and the converter system 600 in accordance with one or more embodiments described herein. The planar transformer 1200 may include many of the same components as the planar transformer 430, the planar transformer 530, and the planar transformer 630 and may be interchangeable with the planar transformer 430, the planar transformer 530, and the planar transformer 630 for use in the converter system 400, the converter system 500, and the converter system 600, according to one or more examples. The planar transformer 1200 may include a first primary coil 633, a second primary coil 650, a first secondary coil 639, a second secondary coil 645, and an electromagnetic shielding coil 1206, which all may be implemented in one or more layers of a printed circuit board (PCB) 1203.

The first primary coil 633 and the second primary coil 650 may be in or on a first layer of the PCB 1103. The first primary coil 633 and the second primary coil 650 may be embedded in a first layer of the PCB 1203 with copper traces to connect to other components (*e.g.,* the first switch 606a and the second switch 606b) of the converter system 600, as shown in FIG. 6. The first secondary coil 639 and the second secondary coil 645 may be in or on one or more second layers of the PCB 1203, different from the first layer. Similar to that of the first primary coil 633 and the second primary coil 650, the first secondary coil 639 and the second secondary coil 645 may be embedded in one or more second layers of the PCB 1103 with copper traces to connect to other components (*e.g.,* the first diode set 660, the second diode set 670, the first load 666, and the second load 676, *etc*.) of the converter system 600, as shown in FIG. 6, according to one or more examples.

The electromagnetic shielding coil 1206 may be in or on the first layer of the PCB 1203 with the first primary coil 633 and the second primary coil 650. However, the electromagnetic shielding coil 1206 is not restricted to just the first layer and may be in or on the one or more second layers of the PCB 1203. For example, the electromagnetic shielding coil 1206 may be embedded in one or more second layers of the PCB 1203, different from that of the first primary coil 633, the second primary coil 650, the first secondary coil 639, and the second secondary coil 645, depending on the application for use of the planar transformer 1200. The electromagnetic shielding coil 1206 may include flat windings and may provide a shield for electromagnetic interference for the planar transformer 1200.

The electromagnetic shielding coil 1206 may have an outer perimeter larger than each of an outer perimeter of the first primary coil 633, an outer perimeter of the second primary coil 650, an outer perimeter of the first secondary coil 639, and an outer perimeter of the second secondary coil 645, as shown in FIG. 12. The outer perimeter of the electromagnetic shielding coil 1206 may surround the outer perimeters of the first primary coil 633 and the second primary coil 650.

The first primary coil 633 and the second primary coil 650 may have an outer perimeter that may be square-like in shape. The outer perimeter of the first primary coil 633 and the outer perimeter of the second primary coil 650 may be equal. The first secondary coil 639 and the second secondary coil 645 may have an outer perimeter that may be square-like in shape. The outer perimeter of first secondary coil 639 and the outer perimeter of the second secondary coil 645 may be equal. The outer perimeters of the first primary coil 633, the second primary coil 650, the first secondary coil 639, and the second secondary coil 645 may be equal.

The first secondary coil 639 may be on one side of the first primary coil 633, and the second secondary coil 645 may be on one side of the second primary coil 650. For example, the first secondary coil 639 may be stacked on one side of the first primary coil 633, and the second secondary coil 645 may be stacked on one side of the second primary coil 650. The first primary coil 633 and the second primary coil 650 may be in a side-by-side configuration in the PCB 1203. The first secondary coil 639 and the second secondary coil 645 may be in a side-by-side configuration in the PCB 1203.

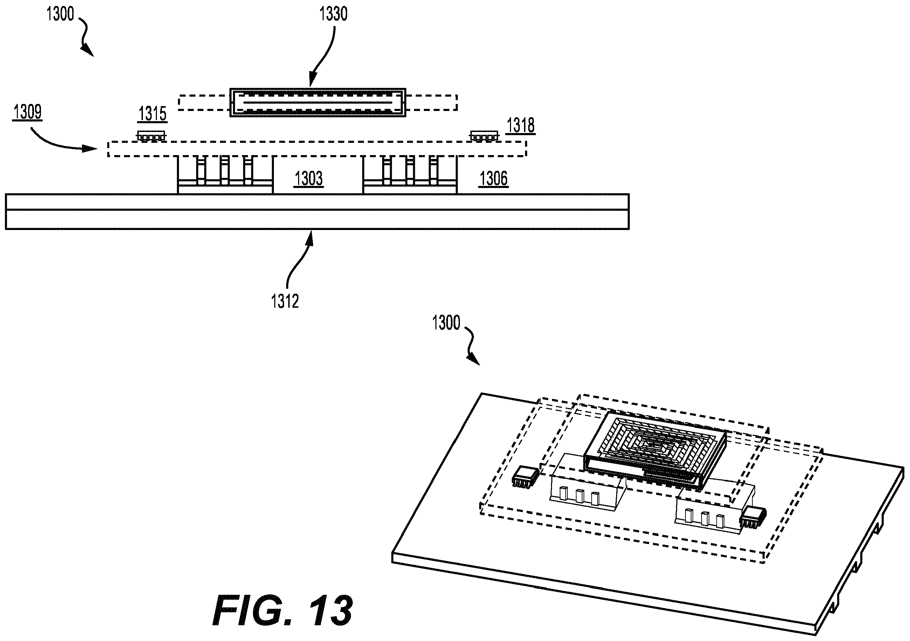

FIG. 13 depicts a power converter assembly 1300 that may be implemented in the converter system 400, the converter system 500, and the converter system 600 in accordance with one or more embodiments described herein. The power converter assembly 1300 may include a power supply PCB board 1330, a power board 1309, a first switch 1315, a second switch 1318, a first power module 1303, a second power module 1306, and a cold plate 1312.

Components of the power converter assembly 1300 may be used in the converter system 400, the converter system 500, and the converter system 600 and may be interchangeable in some cases. The power supply PCB board 1330 may include many of the same components as the planar transformer 430, the planar transformer 530, and the planar transformer 630 and may be interchangeable with the planar transformer 430, the planar transformer 530, and the planar transformer 630. The power supply PCB board 1330 may include many of the same components as the planar transformers 700 and 800 be interchangeable with the planar transformers 700 and 800. The first switch 1315 may include many of the same components as the first switch 406a and the first switch 506a. The second switch 1318 may include many of the same components as the second switch 406b and the second switch 506b. The first power module 1303 may include many of the same components as the first load 466 and the first load 566. The second power module 1306 may include many of the same components as the second load 476 and the second load 576.

The power supply PCB board 1330 may be provided on a first side of the power board 1309. The first power module 1303 and the second power module 1306 may be provided on a second side of the power board 1309, with the first side being opposite to the first side. The first power module 1303 and the second power module 1306 may be coupled to the cold plate 1312, which may provide cooling for the power modules 1303 and 1306 during operation.

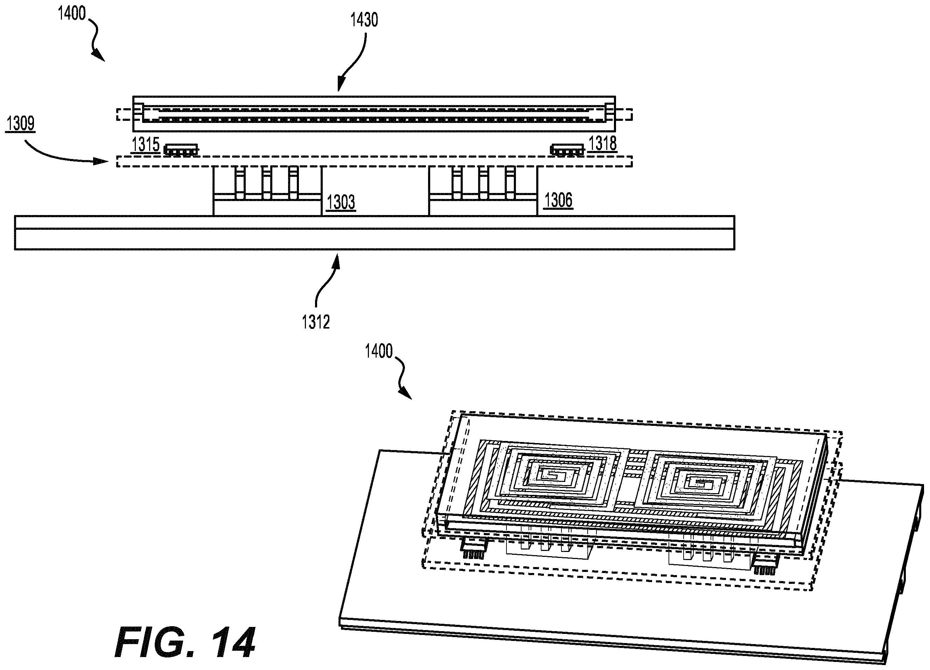

FIG. 14 depicts a power converter assembly 1400 that may be implemented in the converter system 400, the converter system 500, and the converter system 600 in accordance with one or more embodiments described herein. The power converter assembly 1400 may include a power supply PCB board 1430, a power board 1309, a first switch 1315, a second switch 1318, a first power module 1303, a second power module 1306, and a cold plate 1312.

Components of the power converter assembly 1400 may be used in the converter system 400, the converter system 500, and the converter system 600 and may be interchangeable in some cases. The power supply PCB board 1430 may include many of the same components as the planar transformer 430, the planar transformer 530, and the planar transformer 630 and may be interchangeable with the planar transformer 430, the planar transformer 530, and the planar transformer 630. The power supply PCB board 1430 may include many of the same components as the planar transformers 900 and 1000 and may be interchangeable with the planar transformers 900 and 1000. The first switch 1315 may include many of the same components as the first switch 406a and the first switch 506a. The second switch 1318 may include many of the same components as the second switch 406b and the second switch 506b. The first power module 1303 may include many of the same components as the first load 466 and the first load 566. The second power module 1306 may include many of the same components as the second load 476 and the second load 576.

The power supply PCB board 1430 may be provided on a first side of the power board 1309. The first power module 1303 and the second power module 1306 may be provided on a second side of the power board 1309, with the first side being opposite to the first side. The first power module 1303 and the second power module 1306 may be coupled to the cold plate 1312, which may provide cooling for the power modules 1303 and 1306 during operation.

One or more embodiments described herein may include printed circuit board (PCB) winding coils, which are flat and thin. According to one or more embodiments, one transformer driver may be used to generate multiple output voltages. According to one or more embodiments, a ferrite core may be omitted to further save material costs and assembly costs.

According to one or more embodiments, a single transformer driver may be used to generate multiple outputs, and a single primary winding may be used to transfer power to multiple secondary windings, further helping to save space on PCB boards. Depending on the coil arrangement and the coupling between them, several circuit topologies may be used for power conversion.

According to one or more embodiments, a power converter system may include a planar transformer with a ferrite core with a single resonant capacitor on the primary coil, which may include many LLC converters. According to one or more embodiments, a power converter system may include a planar transformer which may omit a ferrite core, and resonant capacitors may be needed on secondary coils. According to one or more embodiments, a power converter system may include a planar transformer that may include multiple primary coils and multiple secondary coils. According to one or more embodiments a planar transformer may include a sandwiched coil arrangement with a ferrite shielding core. According to one or more embodiments, a planar transformer may include a sandwiched coil arrangement without a ferrite shielding core. In the sandwiched coil arrangement, a primary coil may be sandwiched between two secondary coils. In the sandwiched coil arrangement with a ferrite shielding core, ferrite may be used to increase the magnetic coupling and efficiency. In the sandwiched coil arrangement without a ferrite shielding core, an electromagnetic shielding coil may be used to limit the fringing field.

According to one or more embodiments, a planar transformer may include a coil arrangement with one primary coil and two or more secondary coils with a ferrite shielding core. According to one or more embodiments, a planar transformer may include a coil arrangement with one primary coil and two or more secondary coils without a ferrite shielding core. In the arrangement with one primary coil, a single primary coil may be used to transfer power to two or more secondary coils. In the arrangement with a ferrite shielding coil, the ferrite shielding coil may be used to increase the magnetic coupling and efficiency. In the arrangement with the electromagnetic shielding coil, the electromagnetic shielding coil may be used to limit the fringing field.

According to one or more embodiments, a planar transformer may include a coil arrangement with two or more primary coils and two or more secondary coils. In this coil arrangement, a ferrite shielding core may be used to increase the magnetic coupling and efficiency. In this coil arrangement, an electromagnetic shielding coil may be used to limit the fringing field and a ferrite shielding core may be omitted.

According to one or more embodiments, an assembly may include a dual-output isolated power supply which may be provided on one side of a main power board. In this case, the number of layers on the main PCB power board may be reduced, which may reduce costs.

Using lower-cost and lower profile PCB windings instead of using higher-cost and higher profile conventional ferrite transformers may reduce cost and space of power supplies in automotive applications. By fabricating power supplies on a separate PCB board, the number of PCB layers of the main power board may be reduced, further saving associated costs.

Other embodiments of the disclosure will be apparent to those skilled in the art from consideration of the specification and practice of the invention disclosed herein. It is intended that the specification and examples be considered as exemplary only, with a true scope and spirit of the invention being indicated by the following claims.

## Claims

1. A planar transformer, comprising:
a first primary coil in a first layer of a printed circuit board (PCB);
a first secondary coil in one or more second layers in the PCB; and
a second secondary coil in the one or more second layers.

2. The planar transformer of claim 1, further comprising:
one or more ferrite materials, the one or more ferrite materials providing a shield for electromagnetic interference for the planar transformer.

3. The planar transformer of claim 1 or 2, further comprising:
an electromagnetic shielding coil in or on the first layer or in or on the one or
more second layers,
and wherein preferably:
the electromagnetic shielding coil surrounds the first primary coil in the first layer; and
an outer perimeter of the electromagnetic shielding coil is larger than an outer perimeter of the first secondary coil with an outer perimeter of the second secondary coil.

4. The planar transformer of any one of claims 1 to 3, wherein the first primary coil, the first secondary coil, and the second secondary coil include flat windings.

5. The planar transformer of any one of claims 1 to 4, wherein
an outer perimeter of the first primary coil is larger than an outer perimeter of the first secondary coil and an outer perimeter of the second secondary coil, or wherein
an outer perimeter of the first primary coil is equal to an outer perimeter of the first secondary coil, and the outer perimeter of the first secondary coil is equal to an outer perimeter of the second secondary coil.

6. The planar transformer of any one of claims 1 to 5, further comprising a second primary coil in the first layer.

7. The planar transformer of claim 1, wherein
the first secondary coil is on a first side of the first primary coil and the second secondary coil is on a second side of the first primary coil, the second side being opposite to the first side, wherein the first primary coil, the first secondary coil, and the second secondary coil are arranged in a sandwiched coil arrangement,
or
wherein the first secondary coil and the second secondary coil are on a same side of the first primary coil.

8. A system, comprising:
a gate driver connectable to a DC voltage source;
two or more power modules; and
a planar transformer, comprising:
a first primary coil connected to the gate driver; and
two or more secondary coils connected to the first primary coil and the two or more power modules.

9. The system of claim 8, wherein the first primary coil is in a first layer of a printed circuit board (PCB), and
the two or more secondary coils include:
a first secondary coil in one or more second layers in the PCB; and
a second secondary coil in the one or more second layers.
and wherein the system further preferably comprises:
an electromagnetic shielding coil in or on the first layer, the electromagnetic shielding coil surrounding the first primary coil in the first layer, wherein an outer perimeter of the electromagnetic shielding coil is larger than an outer perimeter of the first secondary coil with an outer perimeter of the second secondary coil.

10. An inverter comprising the system of claim 8 or 9.

11. A vehicle comprising the inverter of claim 10.

12. A system, comprising:
two or more power modules provided on a first side of a power board;
a cold plate coupled to the two or more power modules; and
a planar transformer provided on a second side of the power board, the second side being opposite to the first side, the planar transformer comprising:
a first primary coil in a first layer of a printed circuit board (PCB); and
two or more secondary coils in one or more second layers in the PCB.

13. The system of claim 12,
wherein the two or more secondary coils include:
a first secondary coil in the one or more second layers in the PCB; and
a second secondary coil in the one or more second layers,
wherein the first secondary coil is on a first side of the first primary coil and the second secondary coil is on a second side of the first primary coil, the second side being opposite to the first side, and
wherein the first primary coil, the first secondary coil, and the second secondary coil are arranged in a sandwiched coil arrangement.

14. The system of any one of claims 12 to 13,
wherein the two or more secondary coils include:
a first secondary coil in the one or more second layers in the PCB; and
a second secondary coil in the one or more second layers, and
wherein the first secondary coil and the second secondary coil are on a same side of the first primary coil.

15. The system of any one of claims 12 to 14, further comprising:
a second primary coil in the first layer,
wherein the two or more secondary coils include:
a first secondary coil in the one or more second layers in the PCB; and
a second secondary coil in the one or more second layers,
wherein the first secondary coil is on one side of the first primary coil, and
wherein the second secondary coil is on one side of the second primary coil.
and preferably further comprising an electromagnetic shielding coil in or on the first layer, the electromagnetic shielding coil surrounding the first primary coil and the second primary coil in the first layer.
